# EUROPEAN PATENT SPECIFICATION

(11) **EP 1 099 705 B1**
(45) Date of publication and mention of the grant of the patent: **11.02.2004**
(21) Application number: 99122580.6
(22) Date of filing: 12.11.1999
(51) Int. Cl.: C07F 9/48, C07F 9/30, C07F 9/34

(54) **Method for preparing 3-(hydroxyphenylphosphinyl)-propanoic acid**
Verfahren zur Herstellung von 3-(Hydroxyphenylphosphinyl)-propansäure
Procédé pour la préparation de l'acide 3-(hydroxyphenylphosphinyl)-propanoique

(43) Date of publication of application: 16.05.2001
(73) Proprietor: SAEHAN INDUSTRIES, INC., Kyongsangbuk-Do (KR)
(72) Inventor: Soo Sung, Lee, Seoul (KR); Jong Hee, Kim, Seocho-Ku, Seoul (KR); Soon Sik, Kim, Songpa-Ku, Seoul (KR)
(74) Representative: Becker Kurig Straus

(56) References cited:
- US-A- 4 081 463
- US-A- 4 769 182
- KARDANOV N.A.: "Reaction of phenyldichlorophosphine with acryloyl chloride in the presence of phenylphosphonous acid" JOURNAL OF GENERAL CHEMISTRY USSR., vol. 62, no. 1, - 10 July 1992 (1992-07-10) pages 182-183, XP002135951 CONSULTANTS BUREAU. NEW YORK., US
- ANDREEV N.A.: "Hydrolysis and acidolysis of phosphonic and phosphonous dichlorides" JOURNAL OF GENERAL CHEMISTRY USSR., vol. 51, no. 3, - 20 August 1981 (1981-08-20) pages 444-448, XP002135952 CONSULTANTS BUREAU. NEW YORK., US
- CHEMICAL ABSTRACTS, vol. 067, no. 7, 14 August 1967 (1967-08-14) Columbus, Ohio, US; abstract no. 032744, PUDOVIK A N ET AL: "Reaction of phenyldichlorophosphine with acrylic acid" XP002135953 & ZH. OBSHCH. KHIM. (ZOKHA4);1967; VOL.37 (2); PP.455-60, A. E. Arbuzov Inst. Organ. Fiz. Khim.;Kaz n; USSR

## Description

### BACKGROUND OF THE INVENTION

### 1. Field of the Invention

The present invention relates to a method for preparing 3-(hydroxyphenylphosphinyl)-propanoic acid. 3-(hydroxyphenylphosphinyl)-propanoic acid, which is commonly used as a flame retardant for polyester resins, is generally prepared by the condensation of phenylphosphonous dichloride and acrylic acid, followed by the hydrolysis of the condensate, 3-(chlorophenylphosphinyl)-propionylchloride, as shown in the following reaction formula I:

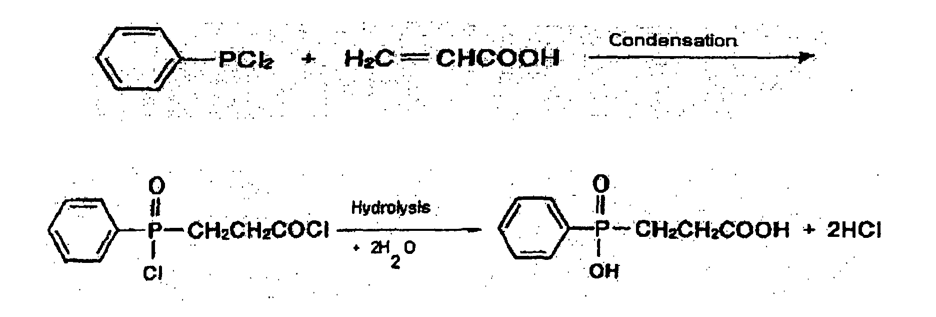

### 2. Description of the Prior Art

Pudovik et al. reported the above procedure in the Russian Journal of Organic Chemistry (Vol. 137, pp. 423-427) in 1967. Since then, there have been disclosed a number of improved procedures which could increase the production yield by controlling a reactant mole fraction or reaction temperature. For example, U.S. Pat. No. 4,081,463 (Birum et al.) proposes a method in which acrylic acid was used at an amount more by 25^{∼}45 mol% (more preferably 30^{∼}40 mol%) than that of phenylphosphonous dichloride, insisting that the production yield can be increased by using excess acrylic acid because a portion of phenylphosphonous dichloride remains unreacted when these reactants are present at the same equivalent. However, this method is problematic in that not only is the reactant wasted due to the excess of acrylic acid, but also the production yield is not increased to a satisfactory extent. Another reference directed to the preparation of 3-(hydroxyphenylphosphinyl)-propanoic acid is U.S. Pat. No. 4,769,182, yielded to Hazen. It discloses that the object compound can be produced at high production yields by using acrylic acid at a relatively small amount, but greater by 5^{∼}10 mol% than that of phenylphosphonous dichloride and maintaining the reaction temperature at 115^{∼}150 °C during the reaction of the reactants. In the above-cited patent, Hazen insisted that acrylic acid was not consumed nor converted into an unreactable material, but converted into certain acrylic acid derivatives which were then reacted with remaining phenylphosphonous dichloride at the elevated reaction temperature, which led to an improvement in the production yield. However, despite the enhanced production yield, this method suffers from a weakness in that the effect of excess acrylic acid is abated because acrylic acid used in the reaction is self-condensed or boiled to vaporize owing to the high temperature.

Flame-retardant, 3-(hydroxyphenylphosphinyl)-propanoic acid-containing polyester is generally used for fibers such as curtains, coverlets and night dresses. One of the factors which have significant influence on the quality of these fiber products is color. The colors of the products are partly determined by the color of the polyester. Accordingly, the color of 3-(hydroxyphenylphosphinyl)-propanoic acid, which is added to provide flame retardation for polyester, is very important in determining the colors of final products.

As for 3-(hydroxyphenylphosphinyl)-propanoic acid prepared by the Hazen's method, it is slightly yellowish. Kardanov et al reported in the Journal of General Chemistry USSR (vol. 62, no. 1, pp. 182-183) a method for preparing 3-(hydroxyphenylphosphinyl)-propanoic acid, wherein phenylphosphonous dichloride, phenyl phosphinic acid and an excess acryloyl chloride are reacted, and then the excess acryloyl chloride is removed under vacuum before the obtained 3-(chlorophenylphosphinyl)-propionyl chloride is hydrolyzed.

### SUMMARY OF THE INVENTION

With this background in mind, the present invention was studied to solve the problems of prior arts, and has an object of providing a method for preparing 3-(hydroxyphenylphosphinyl)-propanoic acid of desired color at high yields through a low temperature reaction.

According to one embodiment of the present invention there is provided a method for preparing 3-(hydroxyphenylphosphinyl)-propanoic acid essentially consisting of the steps: reacting phenylphosphonous dichloride with phenylphosphinic acid to give a hydrophosphoryl compound; reacting the hydrophosphoryl compound with acryloyl chloride at a temperature of 0∼40 °C to give 3-(chlorophenylphosphinyl)-propionyl chloride, the acyloyl chloride being present at an amount more by 10∼15 mole% than the amount of the hydrophosphoryl compound; and hydrolyzing the 3-(chlorophenylphosphinyl)-propionyl chloride in water to the 3-(hydroxyphenylphosphinyl)-propanoic acid and then cooling the aqueous mixture to 10°C and standing at 10°C for 1 hour to obtain the 3-(hydroxyphenylphosphinyl)-propanoic acid as precipitate.

### DETAILED DESCRIPTION OF THE INVENTION

In the present invention, 3-(hydroxyphenylphosphinyl)-propanoic acid is prepared from phenylphosphonous dichloride. This starting material is reacted with phenyl phosphinic acid to produce a hydrophosohoryl compound which is, in turn, reacted to excess acryloyl chloride to give 3-(chlorophenylphosphinyl)-propionyl chloride. This adduct is hydrolyzed to the object compound. This reaction procedure is represented by the following Reaction Formula 2:

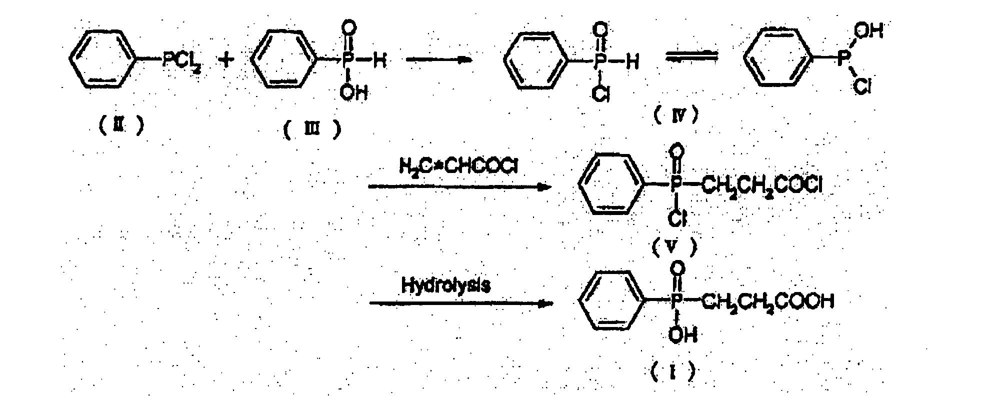

The hydrophosphoryl compound IV resulting from the reaction of phenylphosphonous dichloride II and phenylphosphinic acid III is in a tautomeric state as seen in the Reaction Formula 2 and is of so high reactivity that it can readily react at low temperatures. In accordance with the present invention, the reaction of the hydrophosphoryl compound IV and acryloyl chloride is conducted at a temperature of 0-40 °C.

In addition, since acryloyl chloride (H₂C=CHCOCl) has a boiling point of 72-76 °C which is significantly lower than the boiling point (139 °C) of acrylic acid, the remainder of the acryloyl chloride after the addition reaction can be collected and recycled with ease. In the present invention, acryloyl chloride is used at an amount more by 5-30 mole % and more preferably 10-15 mole % than that of the hydrophosphoryl compound IV.

The intermediate product 3-(chlorophenylphosphinyl)-propionyl chloride V is hydrolyzed in a well-known process to give 3-(hydroxyphenylphosphinyl)-propanoic acid I. Herein, it should be understood that this hydrolysis does not limit the present invention.

A better understanding of the present invention may be obtained in light of the following examples which are set forth to illustrate, but are not to be construed to limit the present invention.

### EXAMPLE I

In a reactor were placed 396.7 g (2.793 moles) of phenylphosphonous dichloride which was then dropwise added with 500 g (2.793 mole) of phenylphosphonous dichloride at 20 °C under a nitrogen atmosphere with stirring. After complete mixing, 556.15 g (6.145 moles) of acryloyl chloride was dropwise added at 20 °C for 90 min, and the reaction mixture was further reacted for 30 min.

In 1,106 g of water, the resulting condensate was dropwise added at 80 °C with vigorous stirring, after which the temperature was cooled to near 10 °C to obtaine precipitates. After being allowed to stand at 10 °C for 1 hour, the slurry containing the precipitates was filtered, washed and dried in a vacuum dryer to produce 1,147.6 g of 3-(hydroxyphenylphosphinyl)-propanoic acid. Yield 96 %.

### COMPARATIVE EXAMPLE I

In a reactor were placed 895g (5 moles) of phenylphosphonous dichloride, which was then heated at 80 °C with stirring. 346g (5.5 moles) of acrylic acid were dropwise added while the reactor was maintained at a temperature of 80∼100 °C under atmospheric pressure. Afer completion of the addition of acrylic acid, the reaction mixture was allowed to stand for 1 hour at 80 °C and then cooled to room temperature. In 1,000 ml of water, the resulting reaction mixture was dropwise added and subjected to hydrolysis at 80 °C, after which the temperature was cooled to near 10 °C to obtaine precipitates. After being allowed to stand at 10 °C for 1 hour, the slurry containing the precipitates was filtered, washed and dried in a vacuum dryer to produce 1,015 g of 3-(hydroxyphenylphosphinyl)-propanoic acid. Yield 94.9 %.

### COMPARATIVE EXAMPLE II

A procedure was carried out following Example I except that 895 g (5 moles) of phenylphosphonous dichloride were placed in the reactor, heated to 80 °C with stirring, and dropwise added with 386 g (5.35 moles) of acrylic acid while maintaining a reaction temperature at 80-100 °C under 1 atm, after which the reaction mixture was heated up to 130 °C, allowed to stand for 1 hour, and cooled to room temperature, to produce 1,008 g of 3-(hydroxyphenylphosphinyl)-propanoic acid. Yield 94.2 %.

The physical properties of 3-(hydroxyphenylphosphinyl)-propanoic acid obtained in the above examples are shown in Table 1, below.

**TABLE 1**

| Nos. of Examples | Molar Ratio | Yield (%) | Color (L/b) | Melting Point (°C) |
|---|---|---|---|---|
| I | 1.1 | 96.0 | 97.4/1.02 | 162 |
| C. I | 1.3 | 85.4 | 97.0/1.4 | 162 |
| C. II | 1.07 | 92.2 | 91.4/4.4 | 162 |

As apparent in above Examples and Comparative Examples, 3-(hydroxyphenylphosphinyl)-propanoic acid can be prepared at high yields with good color through low temperature reactions, in accordance with the present invention. In addition, the present invention is economically favorable because the remainder of the acryloyl chloride after the addition reaction can be collected and recycled with ease.

The present invention has been described in an illustrative manner, and it is to be understood that the terminology used is intended to be in the nature of description rather than of limitation. Many modifications and variations of the present invention are possible in light of the above teachings. Therefore, it is to be understood that the invention may be practiced otherwise than as specifically described.

## Claims

1. A method for preparing 3-(hydroxyphenylphosphinyl)-propanoic acid essentially consisting of the steps:
reacting phenylphosphonous dichloride with phenylphosphinic acid to give a hydrophosphoryl compound;
reacting the hydrophosphoryl compound with acryloyl chloride at a temperature of 0∼40 °C to give 3-(chlorophenylphosphinyl)-propionyl chloride, the acyloyl chloride being present at an amount more by 10∼15 mole% than the amount of the hydrophosphoryl compound; and
hydrolyzing the 3-(chlorophenylphosphinyl)-propionyl chloride in water to the 3-(hydroxyphenylphosphinyl)-propanoic acid and then cooling the aqueous mixture to 10°C and standing at 10°C for 1 hour to obtain the 3-(hydroxyphenylphosphinyl)-propanoic acid as precipitate.

## Patentansprüche

1. Verfahren zur Herstellung von 3-(Hydroxyphenylphosphinyl)-propionsäure, bestehend im wesentlichen aus den Schritten:
Reagieren von Dichlorphenylphosphan mit Phenylphosphinsäure, um eine Hydrophosphorylverbindung zu ergeben;
Reagieren der Hydrophosphorylverbindung mit Acrylsäurechlorid bei einer Temperatur von 0∼40°C °C, um 3-(Chlorphenylphosphinyl)-propionylchlorid zu ergeben, wobei das Acrylsäurechlorid in einer Menge von 10∼15 Mol-% mehr als die Menge der der Hydrophosphorylverbindung vorhanden ist; und
Hydrolysieren des 3-(Chlorphenylphosphinyl)-propionylchlorids in Wasser zu 3-(Hydroxyphenylphosphinyl)-propionsäure und anschließendes Kühlen der wässerigen Mischung auf 10°C und Stehenlassen bei 10°C für 1 Stunde, um die 3-(Hydroxyphenylphosphinyl)-propionsäure als Präzipitat zu erhalten.

## Revendications

1. Procédé de préparation de l'acide 3-(hydroxyphénylphosphinyl)propanoïque essentiellement constitué des étapes consistant à :
faire réagir du dichlorure de phénylphosphore avec de l'acide phénylphosphinique pour obtenir un composé hydrophosphoryle ;
faire réagir le composé hydrophosphoryle avec du chlorure d'acryloyle à une température de 0 à 40°C pour obtenir du chlorure de 3-(chlorophénylphosphinyl)-propionyle, le chlorure d'acyloyle étant présent en une quantité supérieure de 10 à 15 % en moles par rapport à la quantité de composé hydrophosphoryle ; et
hydrolyser le chlorure de 3-(chlorophénylphosphinyl)-propionyle dans de l'eau pour obtenir l'acide 3-(hydroxyphénylphosphinyl)propanoïque et ensuite refroidir le mélange aqueux à 10°C et le laisser reposer à 10°C pendant 1 heure pour obtenir l'acide 3-(hydroxyphénylphosphinyl)propanoïque sous forme d'un précipité.
